# EUROPÄISCHE PATENTSCHRIFT

(11) **EP 3 544 780 B1**
(45) Veröffentlichungstag und Bekanntmachung des Hinweises auf die Patenterteilung: **22.02.2023**
(21) Anmeldenummer: 17710137.5
(22) Anmeldetag: 21.02.2017
(51) Int. Cl.: B29C 31/00, B65B 1/00, G05B 19/418, B65B 57/08, B65G 47/08

(54) **VERFAHREN UND SYSTEM ZUM TRANSPORTIEREN UND MANIPULIEREN VON ZU GEBINDEN ZUSAMMENGEFASSTEN GETRÄNKEBEHÄLTNISSEN SOWIE ZUM EINLEITEN MINDESTENS EINES BESTIMMTEN PROZESSES IM FALLE EINER AUS EINER HANDHABUNG RESULTIERENDEN BESCHÄDIGUNG EINES GEBINDES**
METHOD AND SYSTEM FOR TRANSPORTING AND MANIPULATING BEVERAGE CONTAINERS COMBINED INTO MULTI-PACKS AND FOR INITIATING AT LEAST ONE CERTAIN PROCESS IN THE CASE OF DAMAGE TO A MULTI-PACK RESULTING FROM HANDLING
PROCÉDÉ ET SYSTÈME POUR LE TRANSPORT ET LA MANIPULATION DE RÉCIPIENTS À BOISSONS RASSEMBLÉS EN UNITÉS D'EMBALLAGE AINSI QUE POUR L'INITIALISATION D'AU MOINS UN PROCÉDÉ DÉTERMINÉ DANS LE CAS D'UNE DÉGRADATION D'UNE UNITÉ RÉSULTANT D'UNE MANIPULATION

(30) Priorität: 24.11.2016 DE 102016122725
(43) Veröffentlichungstag der Anmeldung: 02.10.2019
(73) Patentinhaber: KRONES Aktiengesellschaft, 93073 Neutraubling (DE)
(72) Erfinder: KIRZINGER, Johannes, 93073 Neutraubling (DE); WINZINGER, Frank, 93073 Neutraubling (DE)
(74) Vertreter: Benninger, Johannes
(86) Internationale Anmeldenummer: PCT/EP2017/053884
(87) Internationale Veröffentlichungsnummer: WO 2018/095581

(56) Entgegenhaltungen:
- EP-A1- 3 020 514
- EP-A2- 2 226 273
- DE-A1-102011 080 812
- DE-A1-102013 106 187
- DE-A1-102013 204 095

## Beschreibung

Die vorliegende Erfindung betrifft ein Verfahren und ein System zum Transportieren und Manipulieren von zu Gebinden zusammengefassten Getränkebehältnissen sowie zum Einleiten mindesteins eines bestimmten Prozesses im Falle eine aus einer Handhabung resultierenden Beschädigung eines Gebindes.

Artikel, wie sie beispielsweise durch Getränkebehältnisse ausgebildet sein können, werden häufig entlang einer Verpackungslinie transportiert und hierbei ggf. mit mindestens einer Umverpackung versehen. Die mit einer jeweiligen Umverpackung versehenen Artikel bzw. zu einem jeweiligen Gebinde zusammengefassten Getränkebehältnisse können sodann in eine jeweilige auf eine palettierfähige Lage ausgerichtete Vorgruppierung gebracht werden, aus welcher mittels Verdichtung der einzelnen Artikel bzw. Gebinde eine fertige palettierfähige Lage erzeugt wird. Auf einer jeweiligen Palette können eine Vielzahl an palettierfähigen Lagen gestapelt und für den Transport vorbereitet werden.

In der Praxis ist es erwünscht, Paletten mit ihren jeweiligen Lagen in kurzer Zeit zu bilden. Aus diesem Grunde werden Stückgüter mit hohem Durchsatz manipuliert, um diese in die jeweilige palettierfähige Lage überführen zu können und um eine solche jeweilige palettierfähige Lage sodann auf einer jeweils zugeordneten Palette abzusetzen. Durch eine Manipulation mit hohem Durchsatz kann es zu Beschädigungen einzelner Stückgüter bzw. von Getränkebehältnissen oder bereits zu einem jeweiligen Gebinde zusammengefassten Getränkebehältnissen kommen. Beschädigte Getränkebehältnisse sind nicht für den Verkauf geeignet, so dass beschädigte Getränkebehältnisse in einer fertig gestellten Palette nicht erwünscht sind. Auch können beschädigte Stückgüter zu Problemen bei einzelnen Bearbeitungsschritten bis zum Herstellen der vollständigen palettierfähigen Lage führen. Weiter sind fertig gestellte Paletten mit beschädigten Stückgütern instabil und können kippen bzw. zum Aufbrechen neigen.

Eine Aufgabe der Erfindung kann aus diesem Grunde darin gesehen werden, ein System und ein Verfahren zur Verfügung zu stellen, mittels welchen sich die genannten Probleme zumindest teilweise vermeiden oder reduzieren lassen. Zudem soll das System einen unkomplizierten Aufbau besitzen und das Verfahren einfach umgesetzt werden können.

Die Aufgaben der Erfindung werden durch ein System und ein Verfahren gelöst, welche die Merkmale in den unabhängigen Ansprüchen besitzen. Weitere vorteilhafte Ausgestaltungen werden durch die Unteransprüche beschrieben.

Die Erfindung betrifft ein Verfahren gemäß Anspruch 1 zum Transportieren und Manipulieren von zu Gebinden zusammengefassten Getränkebehältnissen. Im Rahmen des erfindungsgemäßen Verfahrens wird eine Vielzahl an Gebinden bzw. eine Vielzahl an nicht beschädigten Gebinden gemeinsam bewegt. Es kann hierbei sein, dass die Vielzahl an Gebinden bzw. die Vielzahl an nicht beschädigten Gebinden im Massenstrom bewegt wird. Beispielsweise kann die Vielzahl an Gebinden mittels wenigstens einer Horizontalfördereinrichtung gemeinsam bzw. im Massenstrom bewegt werden. Vorstellbar ist hierbei, dass die Vielzahl an Gebinden mittels wenigstens einer Horizontalfördereinrichtung gemeinsam bzw. im Massenstrom bewegt wird, wobei die wenigstens eine Horizontalfördereinrichtung als wenigstens ein umlaufend geführtes Transportband ausgebildet ist. Es kann hierbei sein, dass die Vielzahl an Gebinden gemeinsam sowie im ungeordneten Massenstrom bewegt wird. In weiteren Ausführungsformen kann die Vielzahl an Gebinden gemeinsam sowie im geordneten Massenstrom bewegt werden. Denkbar ist hierbei insbesondere, dass die Vielzahl an Gebinden in mehreren parallelen oder zumindest näherungsweise parallelen Reihen bewegt werden. Die einzelnen parallelen Reihen können zueinander beabstandet sein, so dass Gebinde unterschiedlicher Reihen nicht miteinander in Oberflächenkontakt stehen bzw. nicht miteinander in Oberflächenkontakt gebracht sind.

Ein weiterer Schritt sieht ein Manipulieren von Gebinden der gemeinsam bewegten Vielzahl vor, wobei mittels der Manipulation aus mehreren Gebinden eine bestimmte Formation gebildet wird und/oder wobei mittels der Manipulation Gebinde auf mehrere vorzugsweise parallel zueinander orientierte Transportspuren verteilt werden.. Beispielsweise kann es sein, dass das Manipulieren von Gebinden der ggf. im Massenstrom gemeinsam bewegten Vielzahl über wenigstens einen Manipulator erfolgt, der insbesondere als wenigstens ein Parallelkinematik-Roboter und insbesondere als wenigstens ein Tripod ausgebildet ist. Insbesondere kann es sein, dass Gebinde derart manipuliert werden, dass aus mehreren Gebinden der gemeinsam und ggf. im Massenstrom bewegten Vielzahl eine palettierfähige Lage oder eine auf eine palettierfähige Lage ausgerichtete Vorgruppierung gebildet wird. Es kann eine Steuer- und/oder Regeleinheit vorgesehen sein, welche ggf. mit dem wenigstens einen Manipulator bzw. mit dem wenigstens einen Parallelkinematik-Roboter bzw. mit dem wenigstens einen Tripod in Verbindung steht und auf welcher Steuer- und/oder Regeleinheit Informationen zur jeweiligen palettierfähigen Lage bzw. zur auf die jeweilige palettierfähige Lage ausgerichteten Vorgruppierung hinterlegt sind.

Sind mehrere Manipulatoren vorgesehen, so kann es sein, dass die mehreren Manipulatoren als mehrere Parallelkinematik-Roboter und insbesondere als mehrere Tripoden ausgebildet sind. Die mehreren Manipulatoren können mittels der Steuer- und/oder Regeleinheit zum Herstellen bzw. Bilden der palettierfähigen Lage bzw. der auf eine jeweilige palettierfähige Lage ausgerichteten Vorgruppierung aufeinander abgestimmt angesteuert werden.

Erfindungsgemäß ist vorgesehen, dass manipulierte Gebinde im Hinblick auf eine aus der Manipulation resultierende Beschädigung überprüft werden. Hierzu können manipulierte Gebinde in einen Erfassungsbereich einer Sensorik gelangen oder sich in einem Erfassungsbereich einer Sensorik befinden, wobei eine Steuer- und/oder Regeleinheit unter Zuhilfenahme der Sensorik die manipulierten Gebinde im Hinblick auf eine aus der Manipulation resultierende Beschädigung überprüft. Insbesondere kann die Steuer- und/oder Regeleinheit in diversen Ausführungsformen unter Zuhilfenahme der Sensorik die manipulierten Gebinde im Hinblick auf eine aus der Manipulation resultierende Beschädigung optisch überprüfen.

Zudem ist vorgesehen, dass bei einer mittels der Überprüfung festgestellten und/oder erkannten Beschädigung eines Gebindes mindestens ein Prozess zum Aussondern des jeweiligen beschädigten Gebindes und/oder mindestens ein auf die Vermeidung zukünftiger Beschädigungen von Gebinden ausgerichteter Prozess eingeleitet wird. Der mindestens eine Prozess zum Aussondern des jeweiligen beschädigten Gebindes und/oder der mindestens eine Vermeidung zukünftiger Beschädigungen von Gebinden ausgerichteter Prozess kann ggf. mittels der bereits erwähnten Steuer- und/oder Regeleinheit eingeleitet werden.

In bevorzugten Ausführungsformen kann es sein, dass im Rahmen der Manipulation Gebinde der gemeinsam bewegten Vielzahl schräg zu ihrer Bewegungsrichtung versetzt und/oder gedreht werden. Ein Versetzen eines jeweiligen Gebindes schräg zu seiner Bewegungsrichtung und ein Drehen dieses jeweiligen Gebindes können hierbei zeitlich überlagert erfolgen. Das Versetzen und/oder Drehen kann unter Berücksichtigung aus den jeweiligen mehreren Gebinden herzustellenden und auf eine palettierfähige Lage ausgerichteten Vorgruppierung erfolgen. Die Steuer- und/oder Regeleinheit kann zum Versetzen und/oder Drehen mindestens einen Manipulator ansteuern. Informationen zur jeweiligen Vorgruppierung können auf der Steuer- und/oder Regeleinheit hinterlegt sein.

Wie bereits erwähnt, ist denkbar, dass im Rahmen der Manipulation aus mehreren Gebinden der Vielzahl eine Vorgruppierung für eine palettierfähige Lage hergestellt wird. Die hergestellte Vorgruppierung kann hierauf folgend verdichtet bzw. konzentriert werden, woraus resultierend aus der Vorgruppierung die palettierfähige Lage gebildet wird. Die palettierfähige Lage kann in Richtung einer Palette bewegt und auf der Palette abgesetzt werden bzw. an eine jeweilige zugeordnete Palette überführt werden.

Erfindungsgemäß umfassen die Gebinde befüllte Getränkebehältnisse und wird im Rahmen der Überwachung ein ungewollter und insbesondere mit einem Aufbrechen des jeweiligen befüllten Getränkebehältnisses einhergehender Austritt an Flüssigkeit als Beschädigung erkannt und/oder festgestellt.

Insbesondere kann es sein, dass ein ungewollter und insbesondere mit einem Aufbrechen des jeweiligen befüllten Getränkebehältnisses einhergehender Austritt an Flüssigkeit sensorisch und vorzugsweise unter Zuhilfenahme eines Flüssigkeitssensors und/oder eines Kamerasystems erkannt wird.

Vorstellbar ist, dass eine Blasmaschine, welche als Bestandteil eines jeweiligen Gebindes ausgebildete und für die Manipulation vorgesehene Getränkebehältnisse fertigt, bei einem festgestellten und/oder erkannten ungewollten Austritt an Flüssigkeit aus einem jeweiligen befüllten Getränkebehältnis mit vorbestimmten Handlungsanweisungen geregelt wird. Beispielsweise kann die Blasmaschine derart geregelt werden, dass ein Zeitraum einer Temperaturbeaufschlagung von mittels der Blasmaschine zu fertigenden und für die Manipulation vorgesehenen Getränkebehältnissen bei einem festgestellten und/oder erkannten ungewollten Austritt an Flüssigkeit vergrößert wird. Auch ist vorstellbar, dass die Blasmaschine alternativ oder ergänzend hierzu derart geregelt wird, dass eine durch die Blasmaschine bereitgestellte Temperatur zur Fertigung von für die Manipulation vorgesehenen Getränkebehältnissen bei einem festgestellten und/oder erkannten ungewollten Austritt an Flüssigkeit betragsmäßig vergrößert oder betragsmäßig verkleinert wird. Die Temperatur kann via eine als Bestandteil der Blasmaschine ausgebildete Blasform bereitgestellt werden, mit welcher Getränkebehältnisse zeitlich während ihrer Fertigung in Oberflächenkontakt stehen bzw. in Oberflächenkontakt gebracht sind.

Es kann sein, dass im Rahmen der Überwachung ein ungewollter und insbesondere mit einem Aufbrechen des jeweiligen befüllten Getränkebehältnisses einhergehender Austritt an Flüssigkeit mittels wenigstens einer unterhalb und/oder in einer für die Vielzahl an Stückgütern ausgebildeten Bewegungsebene positionierten Flüssigkeitssensors festgestellt und/oder erkannt wird. Hierbei haben sich insbesondere Ausführungsformen bewährt, bei welchen die Vielzahl an Gebinden während ihres Transportes auf einer Transportfläche aufsteht, welche Transportfläche zumindest bereichsweise mit bestimmtem Winkel, welcher sich vorzugsweise zwischen 0° und 5° befindet, gegenüber einer horizontalen Ebene vorzugsweise seitlich geneigt ist. Über die vorzugsweise seitlich geneigte Transportfläche kann aus einem jeweiligen Getränkebehältnis ausgetretene Flüssigkeit an den wenigstens einen Flüssigkeitssensor geleitet werden. In bevorzugten Ausführungsformen ist die Transportfläche gegenüber einer Bewegungsrichtung der Vielzahl an Stückgütern seitlich geneigt. Auch ist denkbar, dass die Transportfläche in oder gegen eine Bewegungsrichtung der Vielzahl an Stückgütern geneigt ist.

Zudem ist ergänzend hierzu oder alternativ für weitere Ausführungsformen vorstellbar, dass die Vielzahl an Gebinden während ihres Transportes auf einer Transportfläche aufsteht, welche Transportfläche mindestens einen und vorzugsweise mehrere Durchbrüche besitzt. Über den mindestens einen und die vorzugsweise mehreren Durchbrüche kann aus einem jeweiligen Getränkebehältnis ausgetretene Flüssigkeit an den wenigstens einen Flüssigkeitssensor geleitet werden.

Vorstellbar ist zudem, dass im Rahmen der Überwachung eine aus der Manipulation resultierende Beschädigung von mechanischen und für jeweilige mehreren Getränkebehältnisse eines jeweiligen Gebindes vorgesehene Koppelung und/oder eine aus der Manipulation resultierende Beschädigung von Umverpackungen der Gebinde festgestellt und/oder erkannt wird. Hierbei kann es sein, dass bei einer festgestellten und/oder erkannten Beschädigung einer mechanischen Koppelung und/oder einer Umverpackung auf einen Verpackungsprozess einer für das Aufbringen von Umverpackungen auf zu manipulierende Getränkebehältnisse vorgesehenen Verpackungsmaschine mit einer vorbestimmten Regelung Einfluss genommen wird.

Wie bereits erwähnt kann es sein, dass manipulierte Gebinde im Hinblick auf eine Beschädigung über mindestens eine vorzugsweise als Kamerasystem ausgebildete optische Sensorik überprüft werden. Vorstellbar ist hierbei, dass manipulierte Gebinde im Hinblick auf eine Beschädigung sowohl unter Zuhilfenahme mindestens einer vorzugsweise als Kamerasystem ausgebildeten optischen Sensorik als auch unter Zuhilfenahme eines Flüssigkeitssensors überprüft werden. Hierdurch lässt sich ggf. eine Beschädigung von Stückgütern bzw. ein ungewollter Austritt an Flüssigkeit aus einem befüllten Getränkebehältnis mit hoher Genauigkeit feststellen bzw. erkennen.

Zudem ist denkbar, dass bei einer mittels der Überprüfung erkannten und/oder festgestellten Beschädigung eines Gebindes nachfolgende Gebinde in geringerer Anzahl je Zeiteinheit manipuliert werden. Die Gebinde können über mindestens einen Manipulator manipuliert werden, wobei ein Durchsatz an zu manipulierenden Gebinden je Zeiteinheit bzw. eine Leistung des mindestens einen Manipulators bei erkannter und/oder festgestellter Beschädigung eines Gebindes vermindert wird.

Die Erfindung betrifft darüber hinaus ein System nach Anspruch 11 zum Transportieren und Manipulieren von zu einem jeweiligen Gebinde zusammengefassten Getränkebehältnissen. Merkmale, welche vorhergehend bereits zu diversen Ausführungsformen des Verfahrens beschrieben wurden, können ebenso bei diversen Ausführungsformen des Systems vorgesehen sein und werden daher nicht redundant erwähnt. Weiter können nachfolgend beschriebene Merkmale, welche diverse Ausführungsformen des Systems betreffen, bei vorhergehend bereits beschriebenem Verfahren Verwendung finden. Das System kann zur Umsetzung der vorherig beschriebenen und das Verfahren betreffenden Ausführungsformen ausgebildet sein. Weiter kann es sein, dass das Verfahren mittels des Systems bzw. einzelnen Komponenten des Systems umgesetzt wird.

Das System umfasst eine Fördereinrichtung, mittels welcher Gebinde transportierbar sind. Weiter umfasst das System einen Manipulator, welcher Gebinde im Verlauf ihres Transportes handhaben kann. Bestandteil des Systems sind zudem mindestens eine Sensorik sowie eine Steuer- und/oder Regeleinheit, welche mit der mindestens einen Sensorik in Verbindung steht. Es ist vorgesehen, dass die Steuer- und/oder Regeleinheit zum Feststellen und/oder Erkennen durch die Handhabung herbeigeführter Beschädigungen von Stückgütern mittels der mindestens einen Sensorik ausgebildet ist. Weiter ist vorgesehen, dass die Steuer- und/oder Regeleinheit bei jeweiliger festgestellter und/oder erkannter Beschädigung mindestens einen Prozess zum Aussondern des jeweiligen beschädigten Gebindes und/oder mindestens einen auf die Vermeidung zukünftiger Beschädigungen von Gebinden abgestimmten Prozess einleiten kann.

In vorstellbaren Ausführungsformen kann es sein, dass der Manipulator als Parallelkinematik-Roboter und insbesondere als Tripod ausgebildet ist. Auch kann der Manipulator als an einem Portalsystem hängend angeordnete und entlang des Portalsystems bewegbare Klemm- und/oder Greifeinrichtung ausgebildet sein.

Auch kann es sein, dass der Manipulator bzw. der Parallelkinematik-Roboter oder Tripod zum Drehen und/oder seitlichen Versetzen von Gebinden ausgebildet ist. Durch das Drehen und/oder seitliche Versetzen von Stückgütern kann der Manipulator bzw. Parallelkinematik-Roboter mehrere Gebinde ggf. in eine auf eine palettierfähige Lage ausgerichtete Vorgruppierung überführen.

Weiter kann der Manipulator über die Steuer- und/oder Regeleinheit bei festgestellter und/oder erkannter Beschädigung eines Gebindes zur Verminderung seines Manipulationsdurchsatzes an handzuhabenden Gebinden je Zeiteinheit ggf. automatisch bzw. selbständig regelbar sein.

Nach der Erfindung umfassen die mindestens eine Sensorik einen Flüssigkeitssensor und/oder ein Kamerasystem, über welche die Steuer- und/oder Regeleinheit einen ungewollten und durch eine Handhabung herbeigeführten Austritt an Flüssigkeit aus einem als Bestandteil eines Gebindes ausgebildeten befüllten Getränkebehältnisses als Beschädigung erkennen und/oder feststellen kann.

Darüber hinaus kann die Fördereinrichtung eine Aufstandsfläche bereitstellen, auf welcher Gebinde während ihres Transportes angeordnet sind, Die Aufstandsfläche kann gegenüber einer horizontalen Ebene insbesondere seitlich geneigt sein und/oder mindestens einen und vorzugsweise mehrere Durchbrüche aufweisen, welche ausgetretene Flüssigkeit passieren kann. Weiter kann der Flüssigkeitssensor derart positioniert sein, dass sich ungewollt ausgetretene Flüssigkeit mittels der gegenüber einer horizontalen Ebene insbesondere seitlich geneigten Aufstandsfläche und/oder über den mindestens einen Durchbruch in einen Erfassungsbereich des Flüssigkeitssensors bewegen kann.

Das System kann eine für die Fertigung von für ein jeweiliges zur Manipulation vorgesehenen Gebindes bestimmten Getränkebehältnisses ausgebildete Blasmaschine umfassen. Die Steuer- und/oder Regeleinheit kann mit der Blasmaschine in Verbindung stehen und hierbei ggf. die Blasmaschine unter Berücksichtigung eines festgestellten und/oder erkannten und durch die Handhabung herbeigeführten Austritts von Flüssigkeit regeln bzw. zur Regelung der Blasmaschine unter Berücksichtigung eines festgestellten und/oder erkannten und durch die Handhabung herbeigeführten Austritts von Flüssigkeit ausgebildet sein. Insbesondere kann hierbei vorgesehen sein, dass mittels der Regelung eine zur Fertigung von Getränkebehältnissen bereitgestellte Blasformtemperatur für die Blasmaschine angehoben oder abgesenkt wird. Auch kann es sein, dass im Rahmen der Regelung eine Verweildauer für einen Oberflächenkontakt eines zu fertigen Getränkebehältnisses mit einer Blasform vergrößert oder verkleinert wird.

Weiter kann es sein, dass die mindestens eine Sensorik eine vorzugsweise als Kamerasystem ausgebildete optische Sensorik umfasst, über welche die Steuer- und/oder Regeleinheit eine durch die Handhabung verursachte Beschädigung einer Umverpackung und/oder mechanischen Koppelung jeweiliger mehrerer zu einem jeweiligen Gebinde zusammengefasster Getränkebehältnisse erkennen kann. Beispielsweise kann die jeweilige mechanische Koppelung als Umreifung ausgebildet sein, welche die Getränkebehältnisse eines jeweiligen Gebindes zusammenhält.

Das System kann eine Verpackungsmaschine zum Aufbringen einer mechanischen Koppelung und/oder gemeinsamen Umverpackung auf mehrere befüllte Getränkebehältnisse und zum hiermit einhergehenden Zusammenfassen der mehreren befüllten Getränkebehältnisse mittels der mechanischen Koppelung und/oder der gemeinsamen Umverpackung zu einem jeweiligen Gebinde umfassen. Die Verpackungsmaschine kann beispielsweise als Schrumpftunnel ausgebildet sein. Weiter ist denkbar, dass die Verpackungsmaschine zum Aufbringen einer jeweiligen als Kartonage ausgebildeten Umverpackung auf eine jeweilige Mehrzahl an Getränkebehältnissen ausgebildet ist. Die Steuer- und/oder Regeleinheit kann mit der Verpackungsmaschine in Verbindung stehen und die Verpackungsmaschine unter Berücksichtigung einer festgestellten und/oder erkannten und durch die Handhabung verursachten Beschädigung einer als Bestandteil eines jeweiligen Gebindes ausgebildeten Umverpackung zum Anpassen eines jeweiligen Verpackungsprozesses regeln bzw. zum Regeln eines Verpackungsprozesses der Verpackungsmaschine unter Berücksichtigung einer festgestellten und/oder erkannten und durch die Handhabung versursachten Beschädigung einer als Bestandteil eines jeweiligen Gebindes ausgebildeten Umverpackung vorbereitet sein. Beispielsweise kann es sein, dass die Verpackungsmaschine als Schrumpftunnel ausgebildet ist und dass die Steuer- und/oder Regeleinheit bei einer festgestellten und/oder erkannten und durch die Handhabung verursachten Beschädigung die als Schrumpftunnel ausgebildete Verpackungsmaschine derart regelt, dass eine Verweildauer für mehrere Getränkebehältnisse im Schrumpftunnel vergrößert oder verkleinert wird. Weiter kann es sein, dass die Verpackungsmaschine als Schrumpftunnel ausgebildet ist und dass die Steuer- und/oder Regeleinheit bei einer festgestellten und/oder erkannten und durch die Handhabung versursachten Beschädigung die als Schrumpftunnel ausgebildete Verpackungsmaschine derart regelt, dass ein im Schrumpftunnel herrschendes und zum Aufschrumpfen thermoplastischen Verpackungsmaterials auf mehrere befüllte Getränkebehältnisses vorgesehenes Temperaturniveau wahlweise angehoben oder abgesenkt wird.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Perspektivansicht einer ersten Ausführungsform eines erfindungsgemäßen Systems;
Figur 2 zeigt eine schematische Perspektivansicht einer weiteren Ausführungsform des erfindungsgemäßen Systems;
Figur 3 zeigt im Flussdiagramm einzelne Schritte, wie sie bei einer denkbaren Ausführungsform des erfindungsgemäßen Verfahrens vorgesehen sein können;
Figur 4 zeigt eine schematische Perspektivansicht einer weiteren Ausführungsform eines erfindungsgemäßen Systems.

Für gleiche oder gleich wirkende Elemente der Ausführungsformen werden identische Bezugszeichen verwendet. Ferner werden der Übersicht halber nur Bezugszeichen in den einzelnen Figuren dargestellt, die für die Beschreibung der jeweiligen Figur erforderlich sind.

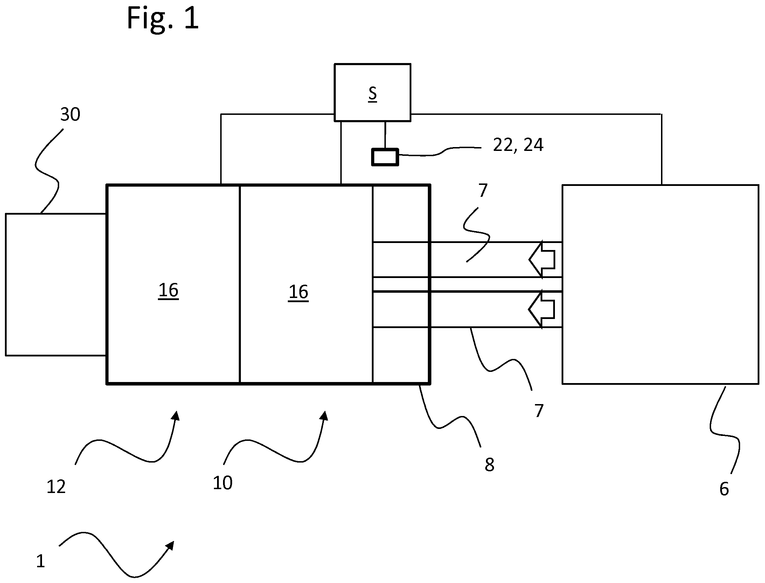

Figur 1 zeigt eine schematische Perspektivansicht einer ersten Ausführungsform eines erfindungsgemäßen Systems 1. Das System 1 ist vorgesehen zum Transportieren und Manipulieren von in den Figuren vorliegender Patentanmeldung nicht mit dargestellten Gebinden, die jeweils mehrere befüllte Getränkebehältnisse umfassen.
Hierzu umfasst das System 1 eine Verteileinrichtung 6, welche Gebinde mit jeweils mehreren befüllten Getränkebehältnissen an zwei Transportbänder 7 überführt.

Über die Transportbänder 7 gelangen die Gebinde zu zwei aufeinanderfolgenden Modulen 12 und 14, wobei jedes der Module 12 und 14 über eine Fördereinrichtung 16 für Stückgüter sowie einen in den Figuren vorliegender Patentanmeldung nicht mit dargestellten Manipulator verfügt. Die zwei aufeinanderfolgenden Module 12 und 14 sind an eine Steuer- und/oder Regeleinheit S gekoppelt, welche die Module 12 und 14 bzw. die Manipulatoren der Module 12 und 14 zum Bilden einer auf eine palettierfähige Lage ausgerichteten Vorgruppierung aus mehreren Gebinden aufeinander abgestimmt ansteuern kann. Hierbei werden selektive einzelne für eine jeweilige Vorgruppierung vorgesehene Gebinde mittels des jeweiligen Manipulators entgegengenommen, schräg zu ihrer jeweiligen Bewegungsrichtung versetzt, hierbei relativ zu weiteren für die jeweilige Vorgruppierung vorgesehenen Gebinden bewegt und ggf. gedreht.

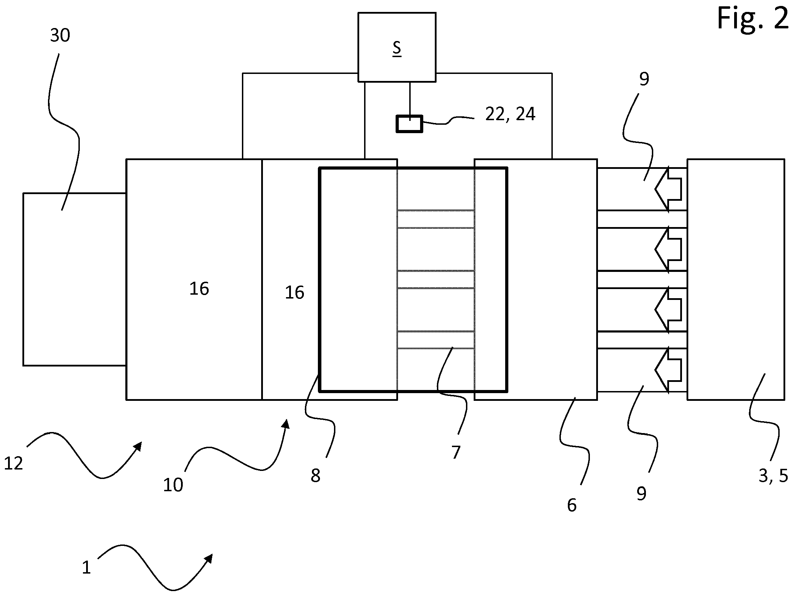

In der Praxis erfolgt eine solche Manipulation bzw. das Herstellen einer Vorgruppierung mit hohem Durchsatz, so dass zu einem jeweiligen Gebinde zusammengefasste Getränkebehältnisse beschädigt werden können und hierbei ggf. aufbrechen, woraus ein ungewollter Austritt an Flüssigkeit aus dem jeweiligen beschädigten Getränkebehältnis resultieren kann. Weiter kann es sein, dass bei solch einem hohen Durchsatz eine jeweilige durch thermoplastisches Verpackungsmaterial ausgebildete und in einer Verpackungsmaschine 3 bzw. einem Schrumpftunnel 5 (vgl. Figur 2) auf die mehreren befüllten Getränkebehältnisse aufgebrachte Umverpackung beschädigt wird bzw. aufbricht, so dass das jeweilige Gebinde als Verpackungseinheit für einen späteren Verkauf nicht mehr verwendet werden kann.

Das System 1 verfügt daher über eine Sensorik 22 mit einem Erfassungsbereich 8, wobei die Sensorik 22 im Ausführungsbeispiel aus Figur 1 als Kamerasystem 24 ausgebildet ist. Die Sensorik 22 bzw. das Kamerasystem 24 ist an die Steuer- und/oder Regeleinheit S gekoppelt. Mittels der Sensorik 22 bzw. mittels des Kamerasystems 24 kann die Steuer- und/oder Regeleinheit S eine mit der Manipulation einhergehende Beschädigung eines jeweiligen Gebindes bzw. eines jeweiligen befüllten Getränkebehältnisses erkennen. Im Ausführungsbeispiel aus Figur 1 kann die Steuer- und/oder Regeleinheit S hierbei feststellen, wenn ein Getränkebehältnis durch eine Manipulation beschädigt bzw. aufgebrochen wird und hierbei ungewollt Flüssigkeit aus einem Getränkebehältnis austritt. Sofern dies der Fall ist, wird zumindest ein Manipulator der Module 10 bzw. 12 über die Steuer- und/oder Regeleinheit S zum Aussondern des jeweiligen Gebindes, welches das beschädigte Getränkebehältnis umfasst, angesteuert. Der mindestens eine Manipulator kann das Gebinde, welches das beschädigte Getränkebehältnis umfasst, beispielsweise auf einer Ablage positionieren, so dass das Gebinde einer den Modulen 10 und 12 nachgeordneten Palettierstation 30 nicht zugeführt wird und keinen Bestandteil der jeweiligen palettierfähigen Lage bildet.

Weiter kann die Steuer- und/oder Regeleinheit S im Ausführungsbeispiel aus Figur 1 mittels der als Kamerasystem 24 ausgebildeten Sensorik 22 erkennen, wenn eine mittels der Verpackungsmaschine 3 bzw. mittels des Schrumpftunnels 5 (vgl. Figur 2) auf mehrere befüllte Getränkebehältnisse aufgebrachte thermoplastische Umverpackung durch eine Manipulation in den Modulen 10 und 12 beschädigt wird. Auch in diesem Fall wird mindestens ein Manipulator über die Steuer- und/oder Regeleinheit S angesteuert, um das jeweilige Gebinde mit der beschädigten Umverpackung auszusondern und ggf. auf einer Ablage zu positionieren. Das jeweilige Gebinde mit der beschädigten Umverpackung bildet sodann keinen Bestandteil einer mittels der Module 10 bzw. 12 gebildeten Vorgruppierung für eine palettierfähige Lage und wird mittels der Palettierstation 30 nicht auf einer Palette abgesetzt.

Wie in Figur 1 zu erkennen, steht die Steuer- und/oder Regeleinheit S mit der Verteileinrichtung 6 in Verbindung. Zudem besteht eine Verbindung zwischen der Steuer- und/oder Regeleinheit S und der in Figur 2 dargestellten Verpackungsmaschine 3 bzw. dem in Figur 2 dargestellten Schrumpftunnel 5.

Sofern die Steuer- und/oder Regeleinheit S über die als Kamerasystem 24 ausgebildete Sensorik 22 feststellt, dass eine Umverpackung eines jeweiligen Gebindes durch bzw. aufgrund der Manipulation beschädigt wurde, wird ein Verpackungsprozess der Verpackungsmaschine 3 bzw. ein Verpackungsprozess des Schrumpftunnels 5 über die Steuer- und/oder Regeleinheit S definiert geregelt. Hierbei kann es beispielsweise sein, dass ein im Schrumpftunnel 5 herrschendes Temperaturniveau angehoben oder abgesenkt wird. Weiter werden die befüllten Getränkebehältnisse zusammen mit ihrem jeweiligen aufgebrachten thermoplastischen Verpackungsmaterial über eine bestimmte Verweildauer durch den Schrumpftunnel 5 bewegt. Die Steuer- und/oder Regeleinheit S kann im Rahmen der Regelung des Schrumpftunnels 5 die Verweildauer zeitlich vergrößern oder verkleinern, um hierdurch auf Charakteristika der jeweiligen Umverpackung einzuwirken und nach Möglichkeit eine Beschädigung weiterer Umverpackungen von Gebinden zu vermeiden bzw. einer Beschädigung weiterer Umverpackungen von Gebinden entgegenzuwirken.

Figur 2 zeigt eine schematische Perspektivansicht einer weiteren Ausführungsform des erfindungsgemäßen Systems 1. Das System 1 aus dem Ausführungsbeispiel aus Figur 2 besitzt eine Verpackungsmaschine 3, welche als Schrumpftunnel 5 ausgebildet ist und über welche thermoplastisches Verpackungsmaterial auf mehrere befüllte Getränkebehältnisse aufgebracht werden kann, woraus resultierend aus den mehreren befüllten Getränkebehältnissen zusammen mit ihrem aufgebrachten thermoplastischen Verpackungsmaterial ein jeweiliges Gebinde hergestellt wird. Die Gebinde verlassen die Verpackungsmaschine 3 bzw. den Schrumpftunnel 5 über vier Horizontalfördereinrichtungen 9 mit parallelen Förderrichtungen und werden mittels der vier Horizontalfördereinrichtungen 9 an eine Verteileinrichtung 6 weitergeführt.

Die Verteileinrichtung 6 gibt hierauf die in vier Reihen die Verpackungsmaschine 3 verlassenden Gebinde an drei Transportbänder 7 weiter. Die Verteileinrichtung 6 ist somit in der Lage, aus einem Gebindestrom, welcher in vier parallelen Reihen mittels der Horizontalfördereinrichtungen 9 bewegt wird, einen Gebindestrom zu bilden, welcher in drei parallelen Reihen mittels der Transportbänder 7 bewegt wird. Über die Transportbänder 7 werden die Gebinde den Modulen 10 und 12 zugeführt, welche die Gebinde mittels Manipulatoren handhaben und aus den Gebinden gemäß vorheriger Beschreibung zu Figur 1 eine jeweilige auf eine palettierfähige Lage ausgerichtete Vorgruppierung herstellen. Die auf eine palettierfähige Lage ausgerichtete Vorgruppierung wird hierauf verdichtet und mittels der Palettierstation 30 auf einer zugeordneten Palette abgesetzt.

Auch das System 1 aus dem Ausführungsbeispiel aus Figur 2 besitzt eine Sensorik 22, die als Kamerasystem 24 ausgebildet ist. Der Erfassungsbereich der Sensorik 22 bzw. des Kamerasystems 24 ist weiterhin unter Verweis mit Ziffer 8 zu erkennen. Eine Zusammenschau der Figuren 1 und 2 lässt hierbei erkennen, dass eine Position des Erfassungsbereichs 8 für das Systems 1 aus dem Ausführungsbeispiel aus Figur 2 von einer Position des Erfassungsbereichs 8 für das System 1 aus dem Ausführungsbeispiel aus Figur 1 abweicht. So erstreckt sich der Erfassungsbereich 8 im Ausführungsbeispiel aus Figur 2 abschnittsweise über die Fördereinrichtung 16 des unmittelbar an die Transportbänder 7 anschließenden Moduls 10 sowie über die Transportbänder 7 und abschnittsweise über die Verteileinrichtung 6. Da insbesondere bei hohem Durchsatz Umverpackungen von Gebinden und/oder einzelne Getränkebehältnisse von Gebinden bei Übergabe an die Transportbänder 7 mittels der Verteileinrichtung 6 beschädigt werden können, besteht bei Ausführungsbeispielen gemäß Figur 2 die Möglichkeit, eine solche Beschädigung zu erkennen und beschädigte Gebinde bzw. Gebinde, welche ein beschädigtes befülltes Getränkebehältnis aufweisen, mittels mindestens eines Manipulators der Module 10 bzw. 12 auszusondern.

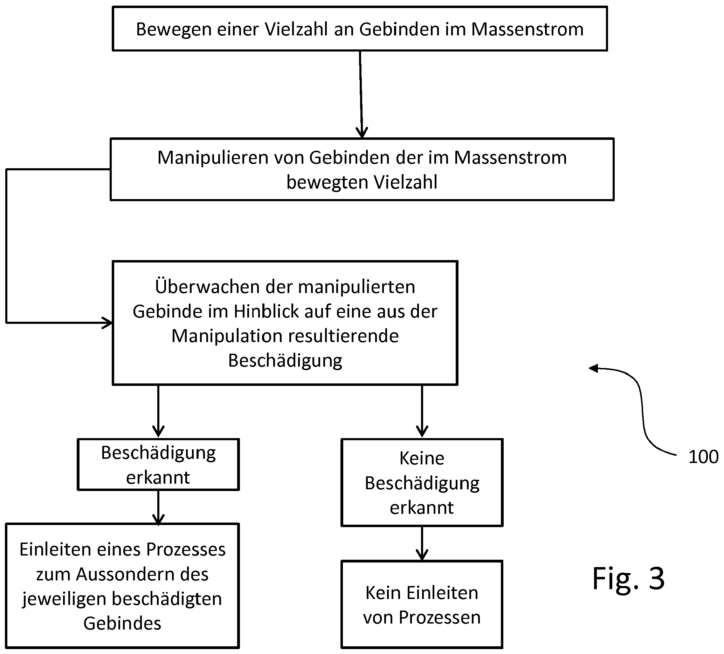

Figur 3 zeigt im Flussdiagramm einzelne Schritte, wie sie bei einer denkbaren Ausführungsform des erfindungsgemäßen Verfahrens 100 vorgesehen sein können. So wird im Rahmen eines ersten Schrittes eine Vielzahl an Gebinden im Massenstrom bewegt. Die Gebinde umfassen hierbei jeweils mehrere befüllte Getränkebehältnisse. Ein weiterer Schritt sieht ein Manipulieren von Gebinden der im Massenstrom bewegten Vielzahl vor. Weiter werden die manipulierten Gebinde im Hinblick auf eine aus der Manipulation resultierende Beschädigung überwacht. Die Gebinde werden im Rahmen der Überwachung auf einen ungewollten und aus der Manipulation resultierenden Austritt an Flüssigkeit aus einem jeweiligen als Bestandteil des Gebindes ausgebildeten Getränkebehältnisses überwacht. Sofern hierbei eine Beschädigung bzw. ein ungewollter Austritt an Flüssigkeit erkannt wird, ist vorgesehen, dass ein Prozess zum Aussondern des beschädigten Gebindes mit dem jeweiligen beschädigten Getränkebehältnis eingeleitet wird, aus welchem beschädigten Getränkebehältnis Flüssigkeit austritt. Sofern im Rahmen der Überwachung keine Beschädigung erkannt wird, ist vorgesehen, dass kein Prozess bzw. kein Prozess zum Aussondern eines Gebindes eingeleitet wird.

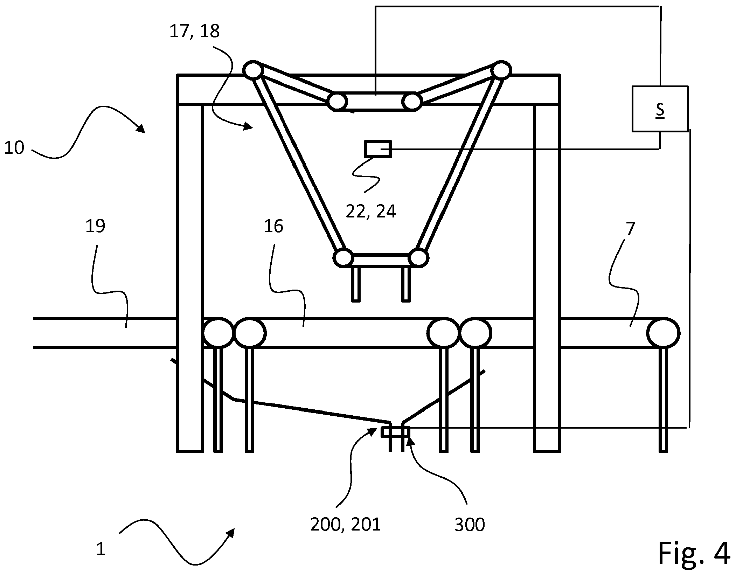

Figur 4 zeigt eine schematische Perspektivansicht einer weiteren Ausführungsform eines erfindungsgemäßen Systems 1. Auch das System 1 aus dem Ausführungsbeispiel aus Figur 4 ist vorgesehen zum Transportieren und Manipulieren von zu Gebinden zusammengefassten befüllten Getränkebehältnissen.

Bestandteil des Systems 1 ist ein Modul 10 mit einem Parallelkinematik-Roboter 17, der in Figur 4 als Tripod 18 ausgebildet ist. Das Modul 10 umfasst zudem eine Fördereinrichtung 16, mittels welcher Gebinde transportiert werden, während ihres Transportes vom Parallelkinematik-Roboter 17 erfasst und in eine bestimmte Formation gebracht werden, welche auf eine Vorgruppierung für eine palettierfähige Lage ausgerichtet ist.

Die Gebinde werden der Fördereinrichtung 16 über ein Transportband 7 zugeführt und verlassen die Fördereinrichtung 16 als bestimmte Formation, welche auf eine Vorgruppierung für eine palettierfähige Lage ausgerichtet ist, über das Auslaufband 19.

Bei hohem Durchsatz bzw. bei einer Manipulation von Gebinden mit befüllten Getränkebehältnissen kann es sein, dass einzelne Getränkebehältnisse aufbrechen, so dass ungewollt Flüssigkeit aus den einzelnen Getränkebehältnissen austritt. Um eine nachfolgende Palettierung dieser Gebinde zu vermeiden, umfasst die Fördereinrichtung 16 aus dem Ausführungsbeispiel aus Figur 4 mehrere in Figur 4 nicht mit dargestellte Durchbrüche bzw. Öffnungen, welche ausgetretene Flüssigkeit passieren kann und hierbei in ein als Trichter 201 ausgebildete Auffangbecken 200 gelangt. Über den Trichter 201 bzw. das Auffangbecken 200 wird die aus einem als Bestandteil eines jeweiligen Gebindes ausgebildeten Getränkebehältnis ungewollte ausgetretene Flüssigkeit in den Erfassungsbereich eines Flüssigkeitssensors 300 geführt, welcher mit der Steuer- und/oder Regeleinheit S in Verbindung steht.

Die Steuer- und/oder Regeleinheit S kann bei einem Erkennen ungewollt ausgetretener Flüssigkeit über den Flüssigkeitssensor 300 den Parallelkinematik-Roboter 17 bzw. den Tripod 18 zum Aussondern des jeweiligen beschädigten Gebindes ansteuern.

Auch das System 1 aus dem Ausführungsbeispiel aus Figur 4 umfasst eine Sensorik 22, welches als Kamerasystem 24 ausgebildet ist und mit der Steuer- und/oder Regeleinheit S in Verbindung steht. Mittels eines in Figur 4 nicht mit dargestellten Schrumpftunnels 5 (vgl. Figur 2) wird eine jeweilige durch thermoplastisches Verpackungsmaterial ausgebildete Umverpackung auf ein jeweiliges Gebinde aufgebracht. Über die Sensorik 22 bzw. über das Kamerasystem 24 kann die Steuer- und/oder Regeleinheit S erkennen, wenn eine Umverpackung eines Gebindes bei einer Manipulation über den Parallelkinematik-Roboter 17 bzw. Tripod 18 beschädigt wird.

Das Austreten von Flüssigkeit kann beispielsweise - wie dargestellt - mit einem Kamerasystem 24, welches oberhalb der Fördereinrichtung 16 angeordnet ist und einer zugehörigen Bildauswertung festgestellt werden. Alternativ kann eine Kamera seitlich der Fördereinrichtung 16 positioniert werden, um beispielsweise ein Tropfen zu erkennen (nicht dargestellt).

Alternativ kann ein Austreten von Flüssigkeit über einen Flüssigkeitssensor 300 in der Nähe des Trichters 201 oder des Auffangbeckens 200 erkannt werden. Bei diesem Sensor 300 kann es sich um einen mit der Flüssigkeit in Kontakt tretenden Sensor handeln, wie z.B. einen Durchflussmesser.

Es kann auch sein, dass sowohl ein optischer Sensor 22, 24 als auch ein mit der Flüssigkeit in Kontakt tretender Sensor 300 parallel, also gleichzeitig, verwendet werden.

Sofern die Steuer- und/oder Regeleinheit S eine solche Beschädigung erkennt, kann die Steuer- und/oder Regeleinheit S den Parallelkinematik-Roboter 17 bzw. den Tripod 18 zum Aussondern des jeweiligen Gebindes ansteuern. Das Aussondern kann beispielsweise in ein neben (seitlich, außerhalb der Bildebene) der Fördereinrichtung 16 angeordnetes Magazin erfolgen (nicht gezeigt).

### Bezugszeichenliste

- 1: System
- 3: Verpackungsmaschine
- 5: Schrumpftunnel
- 6: Verteileinrichtung
- 7: Transportband
- 8: Erfassungsbereich
- 9: Horizontalfördereinrichtung
- 10: Modul
- 12: Modul
- 16: Fördereinrichtung
- 17: Parallelkinematik-Roboter
- 18: Tripod
- 19: Auslaufband
- 22: Sensorik
- 24: Kamerasystem
- 30: Palettierstation
- 100: Verfahren
- 200: Auffangbecken für Flüssigkeit
- 201: Trichter
- 300: Flüssigkeitssensor
- S: Steuer- und/oder Regeleinheit

## Patentansprüche

1. Verfahren (100) zum Transportieren und Manipulieren von zu Gebinden zusammengefassten Getränkebehältnissen, wobei die Gebinde befüllte Getränkebehältnisse umfassen, das Verfahren (100) umfassend folgende Schritte:
- gemeinsames Bewegen einer Vielzahl an Gebinden,
- Manipulieren von Gebinden der gemeinsam bewegten Vielzahl, wobei mittels der Manipulation aus mehreren Gebinden eine bestimmte Formation gebildet wird und/oder wobei mittels der Manipulation Gebinde auf mehrere vorzugsweise parallel zueinander orientierte Transportspuren verteilt werden, wobei
- manipulierte Gebinde in einen Erfassungsbereich einer Sensorik gelangen oder sich in einem Erfassungsbereich einer Sensorik befinden, wobei durch eine Steuer- und/oder Regelungseinheit unter Zuhilfenahme der Sensorik manipulierte Gebinde im Hinblick auf eine aus der Manipulation resultierende Beschädigung überprüft werden, **dadurch gekennzeichnet, dass**
- im Rahmen der Überprüfung ein ungewollter und insbesondere mit einem Aufbrechen des jeweiligen befüllten Getränkebehältnisses einhergehender Austritt an Flüssigkeit als Beschädigung erkannt und/oder festgestellt wird, und dass
- bei einer mittels der Überprüfung festgestellten und/oder erkannten Beschädigung eines Gebindes mittels der Steuer- und/oder Regelungseinheit mindestens ein Prozess zum Aussondern des jeweiligen beschädigten Gebindes und/oder mindestens ein auf die Vermeidung zukünftiger Beschädigungen von Gebinden ausgerichteter Prozess eingeleitet wird.

2. Verfahren nach Anspruch 1, bei welchem im Rahmen der Manipulation Gebinde der gemeinsam bewegten Vielzahl schräg zu ihrer Bewegungsrichtung versetzt und/oder gedreht werden.

3. Verfahren nach Anspruch 1 oder Anspruch 2, bei welchem im Rahmen der Manipulation aus mehreren Gebinden der Vielzahl eine Vorgruppierung für eine palettierfähige Lage hergestellt wird.

4. Verfahren nach Anspruch 1, bei welchem eine Blasmaschine, welche als Bestandteil eines jeweiligen Gebindes ausgebildete und für die Manipulation vorgesehene Getränkebehältnisse fertigt, bei einem festgestellten und/oder erkannten ungewollten Austritt an Flüssigkeit aus einem jeweiligen befüllten Getränkebehältnis mit vorbestimmten Handlungsanweisungen definiert geregelt wird.

5. Verfahren nach Anspruch 1 oder Anspruch 4, bei welchem im Rahmen der Überprüfung ein ungewollter und insbesondere mit einem Aufbrechen des jeweiligen befüllten Getränkebehältnisses einhergehender Austritt an Flüssigkeit mittels wenigstens eines unterhalb und/oder in einer für die Vielzahl an Gebinden ausgebildeten Bewegungsebene positionierten Flüssigkeitssensors festgestellt und/oder erkannt wird.

6. Verfahren nach Anspruch 5, bei welchem die Vielzahl an Gebinden während ihres Transportes auf einer Transportfläche aufsteht, welche Transportfläche bereichsweise mit bestimmtem Winkel gegenüber einer horizontalen Ebene geneigt ist und wobei über die Transportfläche aus einem jeweiligen als Bestandteil eines Gebindes ausgebildeten Getränkebehältnisses ausgetretene Flüssigkeit an den wenigstens einen Flüssigkeitssensor geleitet wird.

7. Verfahren nach einem der Ansprüche 1 bis 6, bei welchem im Rahmen der Überprüfung eine aus der Manipulation resultierende Beschädigung von mechanischen und für jeweilige mehreren Getränkebehältnisse eines jeweiligen Gebindes vorgesehenen Koppelungen und/oder eine aus der Manipulation resultierende Beschädigung von Umverpackungen der Gebinde festgestellt und/oder erkannt wird.

8. Verfahren nach Anspruch 7, bei welchem bei einer festgestellten und/oder erkannten Beschädigung einer mechanischen Koppelung und/oder einer Umverpackung auf einen Verpackungsprozess einer für das Aufbringen von Umverpackungen auf jeweils mehrere für ein jeweiliges Gebinde vorbestimmte Getränkebehältnisse vorgesehene Verpackungsmaschine (3) mit einer vorbestimmten Regelung Einfluss genommen wird.

9. Verfahren nach einem der Ansprüche 1 bis 8, bei welchem manipulierte Gebinde im Hinblick auf eine Beschädigung über mindestens eine vorzugsweise als Kamerasystem (24) ausgebildete optische Sensorik überprüft werden.

10. Verfahren nach einem der Ansprüche 1 bis 9, bei welchem bei einer mittels der Überprüfung erkannten und/oder festgestellten Beschädigung eines Gebindes nachfolgende Gebinde in geringerer Anzahl je Zeiteinheit manipuliert werden.

11. System (1) zum Transportieren und Manipulieren von zu einem jeweiligen Gebinde zusammengefassten Getränkebehältnissen, umfassend
- eine Fördereinrichtung (16), mittels welcher Gebinde transportierbar sind,
- einen Manipulator, welcher Gebinde im Verlauf ihres Transportes handhaben kann,
- mindestens eine Sensorik (22) sowie
- eine Steuer- und/oder Regeleinheit (S), welche mit der mindestens einen Sensorik (22) in Verbindung steht, wobei
- die Steuer- und/oder Regeleinheit (S) zum Feststellen und/oder Erkennen durch die Handhabung herbeigeführter Beschädigungen von Gebinden mittels der mindestens einen Sensorik (22) ausgebildet ist, **dadurch gekennzeichnet, dass**
- die Steuer- und/oder Regeleinheit (S) so angepasst ist, dass sie bei jeweiliger festgestellter und/oder erkannter Beschädigung mindestens einen Prozess zum Aussondern des jeweiligen beschädigten Gebindes und/oder mindestens einen auf die Vermeidung zukünftiger Beschädigungen von Gebinden abgestimmten Prozess einleiten kann,
- wobei die mindestens eine Sensorik (22) einen Flüssigkeitssensor und/oder ein Kamerasystem (24) umfasst, über welches die Steuer- und/oder Regeleinheit (S) so angepasst ist, dass sie einen ungewollten und durch eine Handhabung herbeigeführten Austritt an Flüssigkeit aus einem, als Bestandteil eines Gebindes ausgebildeten, befüllten Getränkebehältnis, als Beschädigung erkennen und/oder feststellen kann.

12. System nach Anspruch 11, bei welchem der Manipulator als Parallelkinematik-Roboter und insbesondere als Tripod ausgebildet ist.

13. System nach Anspruch 11 oder Anspruch 12, bei welchem der Manipulator zum Drehen und/oder seitlichem Versetzen von Gebinden ausgebildet ist.

14. System nach einem der Ansprüche 11 bis 13, bei welchem der Manipulator über die Steuer- und/oder Regeleinheit (S) bei festgestellter und/oder erkannter Beschädigung eines Gebindes zur Verminderung seines Manipulationsdurchsatzes an handzuhabenden Gebinden je Zeiteinheit regelbar ist.

15. System nach Anspruch 11, bei welchem die Fördereinrichtung (16) eine Aufstandsfläche bereitstellt, auf welcher die Gebinde während ihres Transportes angeordnet sind, wobei die Aufstandsfläche gegenüber einer horizontalen Ebene insbesondere seitlich geneigt ist und/oder mindestens einen und vorzugsweise mehrere Durchbrüche aufweist, welche ausgetretene Flüssigkeit passieren kann und bei welchem der Flüssigkeitssensor derart positioniert ist, dass sich ungewollt ausgetretene Flüssigkeit mittels der gegenüber der horizontalen Ebene insbesondere seitlich geneigten Aufstandsfläche und/oder über den mindestens einen Durchbruch in einen Erfassungsbereich des Flüssigkeitssensors bewegen kann.

16. System nach Anspruch 11 oder 15, umfassend eine, zur Fertigung von für ein jeweiliges zur Manipulation vorgesehenes Gebinde bestimmten Getränkebehältnissen ausgebildete, Blasmaschine, wobei die Steuer- und/oder Regeleinheit (S) mit der Blasmaschine in Verbindung steht und die Blasmaschine unter Berücksichtigung eines festgestellten und/oder erkannten durch die Handhabung herbeigeführten, Austritts von Flüssigkeit regeln kann.

17. System nach einem der Ansprüche 11 bis 16, bei welchem die mindestens eine Sensorik (22) eine vorzugsweise als Kamerasystem (24) ausgebildete optische Sensorik umfasst, über welche die Steuer- und/oder Regeleinheit (S) eine durch die Handhabung verursachte Beschädigung einer Umverpackung und/oder mechanischen Koppelung jeweiliger mehrerer zu einem jeweiligen Gebinde zusammengefasster Getränkebehältnisse erkennen kann.

18. System nach Anspruch 17, umfassend eine Verpackungsmaschine (3) zum Aufbringen einer mechanischen Koppelung und/oder gemeinsamen Umverpackung auf mehrere befüllte Getränkebehältnisse und zum hiermit einhergehenden Zusammenfassen der mehreren befüllten Getränkebehältnisse mittels der mechanischen Koppelung und/oder der gemeinsamen Umverpackung zu einem jeweiligen Gebinde, wobei die Steuer- und/oder Regeleinheit (S) mit der Verpackungsmaschine (3) in Verbindung steht und die Verpackungsmaschine (3) unter Berücksichtigung einer festgestellten und/oder erkannten durch die Handhabung versursachten Beschädigung einer mechanischen Koppelung und/oder einer Umverpackung zum Anpassen eines jeweiligen Verpackungsprozesses regeln kann.

## Claims

1. A method (100) for transporting and manipulating packs of beverage containers that are gathered together, wherein the packs comprise filled beverage containers, the method (100) comprising the following steps:
- moving a multitude of packs together,
- manipulating packs of the multitude of packs that are being moved together, wherein a specific formation is formed by the manipulation from a plurality of packs, and/or wherein packs are distributed by the manipulation onto a plurality of transport lanes that are oriented preferably parallel to each other, wherein
- manipulated packs reach a detection range of a sensor system or are located in a detection range of a sensor system, wherein manipulated packs are checked by a control unit and/or regulating unit with the help of the sensor system with regard to a damage resulting from the manipulation, **characterised in that**
- a leak of liquid that is undesired, and, in particular, associated with a breaking open of the particular filled beverage container, is identified and/or detected as a damage in the context of checking, and **in that**,
- in the instance of a damage of a pack having been detected and/or identified by the control unit and/or regulating unit while checking, at least one process is initiated for the removal of the particular damaged pack and/or at least one process is initiated that is aimed at preventing future damages of packs.

2. The method according to claim 1, in which packs from the multitude of packs that are being moved together are offset and/or rotated obliquely to their direction of movement in the context of the manipulation.

3. The method according to claim 1 or claim 2, in which a pre-group for a palletisable layer is produced from a plurality of packs from the multitude of packs in the context of the manipulation.

4. The method according to claim 1, in which a blow moulding machine, which produces beverage containers forming a part of a particular pack and being intended for the manipulation, is regulated in a defined manner with predetermined handling instructions in the instance of an undesired leak of liquid from a particular filled beverage container having been detected and/or identified.

5. The method according to claim 1 or claim 4, in which a leak of liquid that is undesired, and, in particular, associated with a breaking open of the particular filled beverage container, is detected and/or identified in the context of checking by means of at least one liquid sensor positioned below and/or in a plane of movement formed for the multitude of packs.

6. The method according to claim 5, in which the multitude of packs stands on a transport surface during its transport, which transport surface is in some sections inclined at a determined angle relative to a horizontal plane, and wherein liquid that has leaked from a particular beverage container forming a part of a pack is directed via the transport surface to the at least one liquid sensor.

7. The method according to one of the claims 1 to 6, in which a manipulation-caused damage of the mechanical links provided for the particular plurality of beverage containers of a particular pack and/or a manipulation-caused damage of outer packagings of the packs is detected and/or identified in the context of checking.

8. The method according to claim 7, in which, in the instance of a damage of a mechanical link and/or of an outer packaging having been detected and/or identified, influence is taken with a predefined regulation on a packaging process of a packaging machine (3), which is provided for positioning outer packagings on each of a plurality of beverage containers predetermined for a particular pack.

9. The method according to one of the claims 1 to 8, in which manipulated packs are checked with regard to a damage using at least one optical sensor system that is preferably configured as a camera system (24).

10. The method according to one of the claims 1 to 9, in which, in the instance of a damage of a pack having been identified and/or detected by means of the checking, subsequent packs are manipulated in a smaller number per time unit.

11. A system (1) for transporting and manipulating packs of beverage containers that are gathered together in a particular pack, the system (1) comprising
- a conveying device (16), by means of which packs are transportable,
- a manipulator, which can handle packs in the course of their transport,
- at least one sensor system (22), as well as
- a control unit and/or regulating unit (S), which is in contact with at least one sensor system (22), wherein
- the control unit and/or regulating unit (S) is configured to detect and/or identify handling-caused damages of packs by means of the at least one sensor system (22), **characterised in that**
- the control unit and/or regulating unit (S) is adjusted such that, in the instance of a damage having been detected and/or identified, the control unit and/or regulating unit (S) can initiate at least one process for the removal of the particular damaged pack and/or at least one process that is adapted to preventing future damages of packs,
- wherein the at least one sensor system (22) comprises a liquid sensor and/or a camera system (24), via which the control unit and/or regulating unit (S) is adjusted such that it can identify and/or detect as damage an undesired and handling-caused leak of liquid from a filled beverage container forming a part of a pack.

12. The system according to claim 11, in which the manipulator is configured as a parallel kinematic robot and, in particular, as a tripod.

13. The system according to claim 11 or claim 12, in which the manipulator is configured to rotate and/or laterally offset packs.

14. The system according to one of the claims 11 to 13, in which, in the instance of a damage of a pack having been detected and/or identified, the manipulator is regulatable by way of the control unit and/or regulating unit (S) to decrease its manipulation throughput of packs to be handled per time unit.

15. The system according to claim 11, in which the conveying device (16) provides a standing surface, on which the packs are arranged during their transport, wherein the standing surface is inclined, in particular laterally, relative to a horizontal plane, and/or wherein the standing surface has at least one and preferably a plurality of apertures, through which leaked liquid can pass, and in which system the liquid sensor is positioned such that undesirably leaked liquid can move into a detection range of the liquid sensor by way of the standing surface being inclined, in particular laterally, relative to the horizontal plane and/or through the at least one aperture.

16. The system according to claim 11 or 15, comprising a blow moulding machine configured to produce beverage containers destined for a particular pack that is intended for manipulation, wherein the control unit and/or regulating unit (S) is in contact with the blow moulding machine, and wherein the control unit and/or regulating unit (S) can regulate the blow moulding machine in consideration of a detected and/or identified handling-caused leak of liquid.

17. The system according to one of the claims 11 to 16, in which the at least one sensor system (22) comprises an optical sensor system that is preferably configured as a camera system (24), by way of which sensor system the control unit and/or regulating unit (S) can identify a handling-caused damage of an outer packaging and/or of a mechanical link of particular pluralities of beverage containers that are gathered together in a particular pack.

18. The system according to claim 17, comprising a packaging machine (3) used for positioning a mechanical link and/or a common outer packaging on a plurality of filled beverage containers, and for the herewith associated gathering together of the plurality of filled beverage containers in a particular pack by means of the mechanical link and/or by means of the common outer packaging, wherein the control unit and/or regulating unit (S) is in contact with the packaging machine (3), and wherein the control unit and/or regulating unit (S) can regulate the packaging machine (3) to adjust a particular packaging process in consideration of a detected and/or identified handling-caused damage of a mechanical link and/or of an outer packaging.

## Revendications

1. Procédé (100) destiné à transporter et à manipuler des récipients à boisson réunis pour former des multipacks, dans lequel les multipacks comprennent des récipients à boisson remplis, le procédé (100) comprenant les étapes suivantes consistant à:
- déplacer ensemble une pluralité de multipacks,
- manipuler des multipacks de ladite pluralité déplacée ensemble, dans lequel une formation déterminée est formée à partir de plusieurs multipack au moyen de la manipulation et/ou dans lequel des multipacks sont répartis au moyen de la manipulation sur une pluralité de voies de transport qui sont orientées de préférence parallèlement les unes aux autres, dans lequel
- des multipacks manipulés atteignent une zone de détection d'un système de capteurs ou se trouvent dans une zone de détection d'un système de capteurs, dans lequel des multipacks manipulés sont contrôlés par une unité de commande et/ou de régulation à l'aide du système de capteurs en ce qui concerne un endommagement résultant de la manipulation, **caractérisé par le fait que**
- dans le cadre du contrôle, une fuite involontaire de liquide et, en particulier, une fuite de liquide liée à une ouverture par brisure du récipient à boisson rempli respectif est reconnue et/ou détectée en tant qu'endommagement, et que
- si un endommagement sur un multipack est détecté et/ou reconnu au moyen du contrôle, au moins un processus destiné à mettre à part le multipack endommagé respectif et/ou au moins un processus visant à éviter de futurs endommagements sur des multipacks est lancé au moyen de l'unité de commande et/ou de régulation.

2. Procédé selon la revendication 1, dans lequel, dans le cadre de la manipulation, des multipacks de la pluralité déplacée ensemble sont décalés et/ou tournés de manière oblique par rapport à leur direction de déplacement.

3. Procédé selon la revendication 1 ou la revendication 2, dans lequel, dans le cadre de la manipulation, un pré-groupement pour une couche palettisable est réalisé à partir de plusieurs multipacks de la pluralité.

4. Procédé selon la revendication 1, dans lequel une machine de moulage par soufflage qui produit des récipients à boisson réalisés en tant que partie d'un multipack respectif et prévus pour la manipulation, est régulée d'une manière définie au moyen d'instructions de manipulation prédéterminées lorsqu'une fuite de liquide involontaire provenant d'un récipient à boisson rempli respectif est détectée et/ou reconnue.

5. Procédé selon la revendication 1 ou la revendication 4, dans lequel, dans le cadre du contrôle, une fuite involontaire de liquide et, en particulier, une fuite de liquide liée à une ouverture par brisure du récipient à boisson rempli respectif est détectée et/ou reconnue au moyen d'au moins un capteur de liquide positionné en dessous et/ou dans un plan de déplacement configuré pour la pluralité de multipacks.

6. Procédé selon la revendication 5, dans lequel la pluralité de multipacks est disposée debout sur une surface de transport pendant son transport, laquelle surface de transport est inclinée par zones à des angles déterminés par rapport à un plan horizontal et dans lequel du liquide qui s'est échappé d'un récipient à boisson respectif réalisé en tant que partie d'un multipack est dirigé par ladite surface de transport vers ledit au moins un capteur de liquide.

7. Procédé selon l'une quelconque des revendications 1 à 6, dans lequel, dans le cadre du contrôle, on reconnaît et/ou on détecte un endommagement sur des couplages mécaniques prévus pour plusieurs récipients à boisson respectifs d'un multipack respectif, qui résulte de la manipulation, et/ou un endommagement sur des emballages supplémentaires des multipacks, qui résulte de la manipulation.

8. Procédé selon la revendication 7, dans lequel, lorsqu'un endommagement sur un couplage mécanique et/ou sur un emballage supplémentaire est détecté et/ou reconnu, un processus d'emballage d'une machine d'emballage (3) qui est prévue pour appliquer des emballages supplémentaires sur respectivement plusieurs récipients à boisson prédéterminés pour un multipack respectif est influencé au moyen d'une régulation prédéterminée.

9. Procédé selon l'une quelconque des revendications 1 à 8, dans lequel des multipacks manipulés sont contrôlés quant à un endommagement par l'intermédiaire d'au moins un système optique de capteurs réalisé de préférence en tant que système de caméra (24).

10. Procédé selon l'une quelconque des revendications 1 à 9, dans lequel, si un endommagement sur un multipack est reconnu et/ou détecté au moyen du contrôle, des multipacks suivants sont manipulés en un plus petit nombre par unité de temps.

11. Système (1) destiné à transporter et à manipuler des récipients à boisson réunis pour former un multipack respectif, comprenant
- un dispositif de transport (16) au moyen duquel des multipacks peuvent être transportés,
- un manipulateur qui peut manipuler des multipacks lors de leur transport,
- au moins un système de capteurs (22) ainsi qu'
- une unité de commande et/ou de régulation (S) qui est en communication avec ledit au moins un système de capteurs (22), dans lequel
- l'unité de commande et/ou de régulation (S) est conçue pour détecter et/ou reconnaître au moyen dudit au moins un système de capteurs (22) des endommagements sur des multipacks, qui sont provoqués par la manipulation, **caractérisé par le fait que**
- l'unité de commande et/ou de régulation (S) est adaptée de telle manière qu'elle peut lancer au moins un processus destiné à mettre à part le multipack endommagé respectif et/ou au moins un processus conçu pour éviter de futurs endommagements sur des multipacks, lorsqu'un endommagement respectif est détecté et/ou reconnu,
- dans lequel ledit au moins un système de capteurs (22) comprend un capteur de liquide et/ou un système de caméra (24), par l'intermédiaire duquel l'unité de commande et/ou de régulation (S) est adaptée de telle manière qu'elle peut reconnaître et/ou détecter en tant qu'endommagement une fuite involontaire de liquide provoquée par une manipulation et provenant d'un récipient à boisson rempli conçu en tant que partie d'un multipack.

12. Système selon la revendication 11, dans lequel le manipulateur est conçu en tant que robot à cinématique parallèle et en particulier en tant que trépied.

13. Système selon la revendication 11 ou la revendication 12, dans lequel le manipulateur est conçu pour faire tourner et/ou pour décaler latéralement des multipacks.

14. Système selon l'une quelconque des revendications 11 à 13, dans lequel le manipulateur peut être régulé par l'unité de commande et/ou de régulation (S) lorsqu'un endommagement sur un multipack est détecté et/ou reconnu afin de réduire son débit de manipulation de multipacks à manipuler par unité de temps.

15. Système selon la revendication 11, dans lequel le dispositif de transport (16) fournit une surface d'appui sur laquelle sont disposés les multipacks lors de leur transport, dans lequel la surface d'appui est inclinée en particulier latéralement par rapport à un plan horizontal et/ou présente au moins une et de préférence plusieurs ouvertures, à travers lesquelles peut passer du liquide qui s'est échappé, et dans lequel ledit capteur de liquide est positionné de telle manière que du liquide qui s'est échappé involontairement peut se déplacer dans une zone de détection du capteur de liquide au moyen de la surface d'appui inclinée en particulier latéralement par rapport au plan horizontal, et/ou par ladite au moins une ouverture.

16. Système selon la revendication 11 ou 15, comprenant une machine de moulage par soufflage destinée à la production de récipients à boisson destinés à un multipack respectif prévu pour la manipulation, dans lequel l'unité de commande et/ou de régulation (S) est en communication avec la machine de moulage par soufflage et peut réguler la machine de moulage par soufflage en prenant en compte une fuite de liquide détectée et/ou reconnue qui est provoquée par la manipulation.

17. Système selon l'une quelconque des revendications 11 à 16, dans lequel ledit au moins un système de capteurs (22) comprend un système optique de capteurs qui est conçu de préférence en tant que système de caméra (24) et par l'intermédiaire duquel l'unité de commande et/ou de régulation (S) peut détecter un endommagement causé par la manipulation sur un emballage supplémentaire et/ou sur un couplage mécanique d'une pluralité respective de récipients à boisson réunis pour former un multipack respectif.

18. Système selon la revendication 17, comprenant une machine d'emballage (3) destinée à appliquer un couplage mécanique et/ou un emballage supplémentaire commun à une pluralité de récipients à boisson remplis et à réunir, ce qui va de pair avec, la pluralité de récipients à boisson remplis au moyen du couplage mécanique et/ou de l'emballage supplémentaire commun pour former un multipack respectif, dans lequel l'unité de commande et/ou de régulation (S) est en communication avec la machine d'emballage (3) et peut réguler la machine d'emballage (3) en prenant en compte un endommagement détecté et/ou reconnu sur un couplage mécanique et/ou sur un emballage supplémentaire, qui est provoqué par la manipulation, pour adapter un processus d'emballage respectif.
